# EUROPÄISCHE PATENTSCHRIFT

(11) **EP 2 807 370 B1**
(45) Veröffentlichungstag und Bekanntmachung des Hinweises auf die Patenterteilung: **18.05.2016**
(21) Anmeldenummer: 12733693.1
(22) Anmeldetag: 06.07.2012
(51) Int. Cl.: F03D 7/02, F03D 7/04

(54) **SICHERHEITSKETTE UND VERFAHREN ZUM BETREIBEN EINER WINDTURBINE**
SAFETY CHAIN AND METHOD FOR OPERATING A WIND TURBINE
CHAÎNE DE SÉCURITÉ ET PROCÉDÉ PERMETTANT DE FAIRE FONCTIONNER UNE TURBINE ÉOLIENNE

(30) Priorität: 15.07.2011 DE 102011079269
(43) Veröffentlichungstag der Anmeldung: 03.12.2014
(73) Patentinhaber: Suzlon Energy GmbH, 18057 Rostock (DE)
(72) Erfinder: VILBRANDT, Reinhard, 18059 Rostock (DE); IBENDORF, Ingo, 18057 Rostock (DE)
(86) Internationale Anmeldenummer: PCT/EP2012/063240
(87) Internationale Veröffentlichungsnummer: WO 2013/010814

(56) Entgegenhaltungen:
- WO-A1-2007/132303
- DE-A1-102005 034 899

## Beschreibung

Die Erfindung betrifft eine Windturbine mit einer Sicherheitskette zum Überwachen und Abschalten einer Windturbine, eine hierfür notwendige Blattverstellvorrichtung sowie ein Verfahren zum Überwachen und Abschalten einer Windturbine.

Die Windturbine umfasst einen Turm, ein auf dem Turm montierbares Maschinenhaus, einen im Maschinenhaus montierbaren Generator und einen über eine Antriebswelle mit dem Generator verbindbaren Rotor. Der Rotor umfasst eine Nabe, mindestens ein Rotorblatt, ein zwischen Rotorblatt und Nabe montierbares Lager und eine Verstellvorrichtung. Das Lager umfasst einen Innenring und einen Außenring die drehbar zu einander angeordnet sind. Das Rotorblatt ist somit im Wesentlichen um seine Längsachse drehbar an der Nabe angeordnet. Durch die Verstellvorrichtung ist das Rotorblatt in verschiedenen Anstellpositionen einstellbar und anhaltbar. Die Verstellvorrichtung umfasst mindestens einen elektrischen Verstellmotor der ein mit dem Rotorblatt verbundenes Zahnrad antreibt, einen Umrichter, der mit einem elektrischen Netz gekoppelt ist und den Verstellmotor ansteuert, und eine Steuereinheit zum Regeln des Umrichters und zum Überwachen der Komponenten der Blattverstellvorrichtung. Um sicherzustellen dass sich die Windturbine bei einem Systemfehler nicht weiterdreht verfügt die Windturbine über eine Anlagensicherheitskette, die als Kabel ausgebildet ist und verschiedene Komponenten der Windturbine, wie z.B. die Verstellvorrichtung der Rotorblätter und eine zentrale Turbinensteuerung, verbindet. Bei Detektieren eines Fehlers in einer der Komponenten wird durch Öffnen der Anlagensicherheitskette eine Sicherheitsfahrt der Rotorblätter eingeleitet.

In bekannten Windturbinen wird die Funktionsüberwachung der Komponenten der Windturbine von der Turbinensteuerung ausgeführt. Die Turbinensteuerung ist dabei mit den Verstellvorrichtungen der Rotorblätter verbunden und kann mit den jeweiligen Verstellvorrichtungen kommunizieren. Die Verstellvorrichtungen der Rotorblätter werden normalerweise über eine allgemeine externe Steuerspannung versorgt. Zum Schutz der Windturbine bei z.B. Betriebsfehler oder bei starkem Wind wird eine Sicherheitsfahrt eingeleitet, bei der die Rotorblätter in die sogenannte Fahnenstellung gedreht werden. Die Fahnenstellung wird dann erreicht, wenn das Rotorblatt aus dem Wind heraus gedreht worden ist, so dass nur eine minimale Angriffsfläche des Rotorblatts dem Wind ausgesetzt ist. Im Normalfall werden zur Einleitung einer Sicherheitsfahrt alle Blattverstellungsvorrichtungen der Rotorblätter gleichzeitig von der Turbinensteuerung angesteuert. Wenn die Steuereinheit einer der Blattverstellvorrichtungen aber einen kritischen Fehler erfasst, kann es gemäß dem Stand der Technik sein, dass die defekte Blattverstellvorrichtung sofort eine Sicherheitsfahrt einleitet. Eine Fehlermeldung wird gleichzeitig von der Steuereinheit an die Turbinensteuerung gesendet. Die Turbinensteuerung bearbeitet die Fehlermeldung und gibt danach den Befehl eine Sicherheitsfahrt einzuleiten an die anderen Blattverstellvorrichtungen weiter. Im Falle eines Ausfalls der Turbinensteuerung ist das Risiko einer Beschädigung der Windturbine hoch, denn dann fällt auch die Kommunikation zwischen den Blattverstellvorrichtungen aus. Bei einem Ausfall der Kommunikation zwischen den Blattverstellvorrichtungen müssen die Blattverstellvorrichtungen völlig autonom die Sicherheitsfahrt einleiten. Wenn die einzelnen Blattverstellvorrichtungen zu unterschiedlichen Zeitpunkten eine Verstellung der Rotorblätter einleiten, entsteht durch die unterschiedlichen Anstellwinkel der Rotorblätter während des Verstellvorgangs eine ungleichmäßige Belastung auf dem Rotor. Diese Unwucht führt zu Beschädigungen an Rotor und Turbine.

Die DE 10 2005 034 899 A1 beschreibt eine Windturbine mit einem System zum Vermeiden dieser hohen Rotorbelastungen. Die Blattverstellvorrichtung der Windturbine weist dabei ein Tochtermodul auf, wobei das Tochtermodul zum Überwachen des Betriebszustands der anderen Blattverstellvorrichtungen ausgebildet ist. Mittels des Tochtermoduls können insbesondere Signale betreffend ein Auslösen einer Sicherheitsfahrt oder ein Ausfallen in einer der Blattverstellvorrichtungen von einer der anderen Blattverstellvorrichtungen erkannt oder übermittelt werden. Im Normalfall wird eine Verstellung der Rotorblätter immer über eine Zentralsteuereinrichtung der Windturbine kommandiert. Wenn die Zentralsteuereinrichtung aber ausfällt und eine der Blattverstellvorrichtungen einen Betriebszustand der außerhalb eines vorher definierten Bereiches liegt feststellt, und deshalb eine Sicherheitsfahrt des ihr zugeordneten Rotorblatts einleitet, können die anderen Blattverstellvorrichtungen dies durch ihr Tochtermodul jeweils erkennen. Die Blattverstellvorrichtungen sind damit befähigt, eine Sicherheitsfahrt zu starten, um somit eine synchrone Sicherheitsfahrt der beiden anderen Rotorblätter durchzuführen. Nachteilig bei diesem System ist unter anderem der komplexe Aufbau mit jeweils einem Tochtermodul pro Verstellvorrichtung und dem damit verbundenen hohen Preis.

Es ist eine Aufgabe der Erfindung, eine verbesserte Funktionsüberwachung anzugeben, welche unter anderem die Nachteile des Stands der Technik vermeidet. Insbesondere soll dabei eine kostengünstige und sichere Methode zum Durchführen einer Sicherheitsfahrt der Rotorblätter vorgestellt werden.

Die Aufgabe wird erfindungsgemäß mit den Merkmalen des Hauptanspruchs 1 gelöst, indem die Blattverstellvorrichtung eine interne Sicherheitskette und eine Anlagensicherheitskette aufweist. Bei der internen Sicherheitskette ist die Steuereinheit der Blattverstellvorrichtung dazu ausgebildet unter anderem alle sicherheitsrelevanten Funktionen und Betriebsparameter der Komponenten der Blattverstellvorrichtung, wie z.B. Umrichter, Verstellmotor, Bremse, Resolver, Endlagenschalter und/oder Spannungsversorgung, sowie der Turbinensteuerung zu überwachen. Die Betriebsparameter die überwacht werden können unter anderem Temperatur, Position, Spannung, Vibrationen und/oder Drehzahl sein. Die Steuereinheit der Blattverstellvorrichtung ist mit einer Turbinensteuerung, z.B. über einen CAN-Bus, verbunden und kann mit der Steuereinheit über diese Verbindung Daten austauschen. Sowohl die Steuereinheit der Blattverstellvorrichtung als auch die Turbinensteuerung ist über einen Schalter mit einer physischen Anlagensicherheitskette verbunden und kann diese Anlagensicherheitskette über den Schalter öffnen und/oder schließen. Die Anlagensicherheitskette ist mit Signaleingängen in der Steuereinheit der Blattverstellvorrichtungen verbunden, so dass eine offene Anlagensicherheitskette eine Sicherheitsfahrt der Blattverstellvorrichtungen startet oder ein Verlassen der Fahnenstellung verhindert wird. Bei öffnen der Anlagensicherheitskette ändert sich gleichzeitig das Signal an allen Signaleingängen der Blattverstellvorrichtungen. Somit wird erreicht, dass eine im Wesentlichen synchrone Sicherheitsfahrt von mindestens zwei Rotorblättern ausgeführt werden kann. Auch wenn es nicht weiter beschreiben wird können die interne Sicherheitskette und die Anlagensicherheitskette natürlich auch bei anderen Typen von Windturbinen, wie z.B. getriebelose Turbinen, und bei Turbinen mit anderen Typen von Blattverstellvorrichtungen, wie z.B. riemenangetriebene oder hydraulische Blattverstellvorrichtungen, eingesetzt werden.

Vor dem Starten der Windturbine ist es denkbar, eine Funktionsüberprüfung der Anlage durchzuführen. Dabei werden die überwachten Betriebsparameter der Komponenten der Blattverstellung über Signaleingänge in die Steuereinheit gelesen. Die Steuereinheit vergleicht danach die eingelesenen Werte mit in einem Speichermodul abgelegten Schwellwerten. Sofern die überwachten Werte innerhalb eines, von den Schwellwerten abgegrenzten, zugelassenen Bereichs liegen meldet die Steuereinheit, dass die Funktionen und Betriebsparameter der Komponenten der Blattverstellung in Ordnung sind. Danach gibt die interne Sicherheitskette ein Signal an den Schalter und an die Turbinensteuerung zum Schließen der Anlagensicherheitskette weiter. Sofern keine Fehler in der Turbinensteuerung vorliegen, schickt auch die Turbinensteuerung ein Signal an den Schalter zum Schließen der Anlagensicherheitskette. Durch Schließen der Anlagensicherheitskette ändert sich das Signal an den Signaleingängen der Anlagensicherheitskette. Durch die Änderung des Signals wird ein Verlassen der Fahnenstellung zugelassen.

Während des Betriebs der Windturbine können die Betriebsparameter der Steuereinheit und der Turbinensteuerung kontinuierlich überwacht werden. Wenn ein Fehler in der Blattverstellvorrichtung entsteht, kann die Blattverstellvorrichtung diesen Fehler immer an die Turbinensteuerung melden. Die Turbinensteuerung kann bei Erhalten der Fehlermeldung von der Blattverstellvorrichtung eine Blattfahrt in Richtung Fahnenstellung einleiten. Bei kleinen Fehlern, z.B. bei Betriebsparameter, die außerhalb des zugelassenen Bereiches liegen, jedoch nicht die Funktion der Blattverstellvorrichtung bedrohen, kann die Turbinensteuerung den Befehl zur Blattfahrt in Richtung Fahnenstellung über die direkte Verbindung zwischen Steuereinheit der Blattverstellvorrichtung und Turbinensteuerung, z.B. über einen CAN-Bus, an die Steuereinheiten der Blattverstellvorrichtungen weitergeben. Bei Erhalten des Befehls über diesen Kommunikationsweg kann eine langsame Blattfahrt in Richtung Fahnenstellung durchgeführt werden.

Bei Fehlern in der Blattverstellvorrichtung, die zu einer Beschädigung der Windturbine führen können, kann die Anlagensicherheitskette durch die Turbinensteuerung geöffnet werden. Gleichzeitig kann aus Redundanzgründen auch ein Signal zur Blattverstellung über die direkte Verbindung zwischen Turbinensteuerung und Steuereinheit der Blattverstellvorrichtung geschickt werden. Durch Öffnen der Anlagensicherheitskette fließt kein Strom durch die Anlagensicherheitskette, somit liegt auch keine Spannung an den mit der Anlagensicherheitskette verbundenen Komponenten an. Das Signal in der Anlagensicherheitskette wird dadurch auf niedrig gesetzt. Die Steuereinheiten der Blattverstellvorrichtungen erhalten gleichzeitig das niedrige Signal von der Anlagensicherheitskette und führen dadurch eine synchrone Sicherheitsfahrt der Rotorblätter durch.

Im Falle eines Ausfalls der Turbinensteuerung wird im Normalfall die Anlagensicherheitskette durch die Turbinensteuerung geöffnet. Es kann aber auch sein, dass die Anlagensicherheitskette trotz eines Defekts in der Turbinensteuerung geschlossen bleibt. Ein solcher Defekt kann zum Beispiel ein Softwarefehler sein, bei dem die Turbinensteuerung zwar keinen internen Fehler erkennt, weil die Betriebsparameter in Ordnung sind, die Fehlermeldung von der Steuereinheit jedoch nicht korrekt bearbeiten kann. In diesem Fall kann die Anlagensicherheitskette auch von den Blattverstellvorrichtungen geöffnet werden. Die Steuereinheiten der Blattverstellvorrichtungen sind dabei derart ausgebildet, so dass die Steuereinheiten, wenn sie innerhalb einer gewissen Zeit nach einer Fehlermeldung keine Rückmeldung von der Turbinensteuerung bekommen haben, selbstständig die Anlagensicherheitskette öffnen. Dieses Zeitfenster kann 500 Millisekunden betragen, vorzugsweise wird die Anlagensicherheitskette aber schon nach 300 Millisekunden nach Abschicken der Fehlermeldung von der Steuereinheit der Blattverstellvorrichtung geöffnet. Wenn einer der Steuereinheiten der Blattverstellvorrichtungen einen Ausfall der Turbinensteuerung registriert und die Anlagensicherheitskette öffnet, wird die Fahrt in Richtung Fahnenstellung von den Blattverstellvorrichtungen erst eingeleitet, wenn das niedrige Signal von der Anlagensicherheitskette an den Signaleingängen der Steuereinheiten anliegt. Somit wird sichergestellt, dass die Verstellung der drei Blätter synchron eingeleitet wird und somit die Belastung an der Turbine niedrig gehalten wird.

Aus Sicherheitsgründen kann die Steuereinheit der Blattverstellvorrichtung aber, wenn sie einen wirklich kritischen internen Fehler registriert, auch eine sofortige Sicherheitsfahrt auslösen und gleichzeitig die Anlagensicherheitskette öffnen. Dies ist ein Ausnahmezustand und geschieht nur bei Fehlern, welche die Funktion der Blattverstellvorrichtung beeinträchtigen, z.B. bei Ausfall des Umrichters, Ausfall der Bremse oder Ausfall des Resolver, z.B. wegen Überhitzung oder Überstrom. Durch die reduzierte Funktion der einen Blattverstellvorrichtung kann diese womöglich keine oder nur sehr langsam eine Sicherheitsfahrt durchführen. Ein Versuch zur Sicherheitsfahrt wird deshalb so schnell wie möglich gestartet. Durch gleichzeitiges öffnen der Anlagensicherheitskette wird aber sichergestellt, dass wenigstens die zwei noch funktionstüchtigen Blattverstellvorrichtungen synchron eine Sicherheitsfahrt ausführen.

Bei der erfindungsgemäßen Lösung hat sich überraschender Weise gezeigt, dass damit erstmalig das Problem einer nicht synchronen Sicherheitsfahrt aller Blätter gelöst wird. Durch intensive Untersuchungen an den Windturbinen wurde herausgefunden, dass es selbst bei Verwendung der Lösung aus dem Stand der Technik immer noch zu einer nicht synchronen Sicherheitsfahrt der verschiedenen Rotorblätter kommen kann. Denn durch das Verschicken der Signale und die Bearbeitung der Fehlermeldung tritt eine gewisse Verzögerung in den Schaltvorgängen der einzelnen Blattverstellvorrichtungen ein. Dadurch wird die Sicherheitsfahrt der letzen Blätter etwas später eingeleitet als die des ersten Blattes. Durch die unsynchrone Sicherheitsfahrt der Rotorblätter entsteht eine Unwucht in dem Rotor die zu starken Belastungen an der Windturbine führt. Schon bei einem Winkelunterschied von 2-3° zwischen den Rotorblättern kann es zu Beschädigungen an der Turbine kommen.

Die Erfindung offenbart also, dass jede Blattverstellvorrichtung eine eigene interne Sicherheitskette aufweist, die ausschließlich auf den Schalter der Anlagensicherheitskette und auf der Turbinensteuerung wirkt. Somit findet keine direkte Kommunikation zwischen den einzelnen internen Sicherheitsketten statt. Lediglich hinsichtlich ihrer Wirkung als Betriebsfreigabe für die Windturbine oder als Aktivierungssignal einer Sicherheitsfahrt der Blattverstellvorrichtungen sind die einzelnen internen Sicherheitsketten indirekt über die Anlagensicherheitskette miteinander logisch verbunden.

Die Anlagensicherheitskette kann auch mit der Turbinensteuerung und einer Kette von Notausschaltern über einen Schalter verbunden sein und kann sowohl von der Turbinensteuerung als auch von der Kette von Notausschaltern geöffnet werden.

Somit wird die Anlagensicherheitskette geöffnet wenn mindestens eine der internen Sicherheitsketten geöffnet ist, und/oder die Kette von Notausschaltern geöffnet ist und/oder die Turbinensteuerung keine Betriebsbereitschaft meldet. Die Anlagensicherheitskette wird erst geschlossen, wenn jeweils alle internen Sicherheitsketten geschlossen sind, die Turbinensteuerung Betriebsbereitschaft meldet und die Kette von Notausschaltern geschlossen ist. Vorteilhafterweise sind die Systeme zum Öffnen und/oder Schließen der Anlagensicherheitskette über jeweils einen eigenen Schalter mit der Anlagensicherheitskette verbunden. Somit kann die Anlagensicherheitskette bei Ausfall eines Schalters immer noch von den anderen Schaltern betätigt werden. Die Anlagensicherheitskette kann in einer weiteren Ausführungsform auch von anderen Komponenten der Windturbine, wie zum Beispiel Serviceluken, geöffnet und geschlossen werden. Als letzter Ausweg - falls sowohl die internen Sicherheitsketten der Blattverstellvorrichtungen und die Turbinensteuerung versagen - kann die Anlagensicherheitskette vorzugsweise auch von einem Drehzahlsensor der Überdrehzahlen des Rotors erkennt oder von einem Vibrationssensor bei Überschreiten eines Schwellwertes geöffnet werden.

Die Anlagensicherheitskette umfasst vorteilhafterweise ein Kabel und mindestens einen Schalter zum Öffnen und/oder Schließen der Anlagensicherheitskette. Durch das Kabel wird ein von dem Zustand der überwachten Komponenten abhängiges Signal geleitet wird. Das Signal kann zwei verschiedene Zustände aufweisen, im ersten Zustand besteht das Signal vorzugsweise aus einer Spannung mit einem Wert innerhalb eines ersten hohen Bereichs und im zweiten Zustand besteht das Signal aus einer Spannung mit einem Wert innerhalb eines zweiten niedrigen Bereichs. Das Signal mit der höheren Spannung entspricht eine Binärziffer Eins und das Signal mit der niedrigen Spannung entspricht eine Binärziffer Null. Die Bereiche des Spannungssignals werden so gewählt, so dass sie sich klar voneinander trennen. Zum Beispiel kann sich der erste Bereich von 2,0V bis 5,0V und der zweite Bereich von 0V bis 0,8V strecken. Wenn alle überwachten Systeme in Ordnung sind, wird die Anlagensicherheitskette geschlossen und das hohe Signal, die Binäre Eins, wird an den mit der Anlagensicherheitskette verbundenen Komponenten geschickt. Bei geschlossener Anlagensicherheitskette kann ein Strom durch die Anlagensicherheitskette fließen, somit liegt an den mit der Anlagensicherheitskette verbundenen Komponenten auch eine Spannung vor. Wenn ein Fehler erfasst wird, öffnet die Sicherheitskette und das Signal wird auf niedrig gesetzt, was die Binäre 0 entspricht. Bei Erhalten des niedrigen Signals, kann die Blattverstellvorrichtung automatisch eine Sicherheitsfahrt ihres Rotorblatts einleiten. Möglich wäre auch ein hohes Signal als Zeichen eines Fehlers und ein niedriges Signal als Zeichen eines korrekt funktionierenden Systems zu setzen. Bei geöffneter Anlagensicherheitskette kann aber kein Strom durch die Anlagensicherheitskette fließen, somit liegt an den mit der Anlagensicherheitskette verbundenen Komponenten auch keine Spannung vor und das Signal weist einen niedrigen Wert auf. Vorteilhafterweise wird daher ein niedriges Signal als Zeichen eines Fehlers verwendet, denn somit wird sichergestellt, dass die Blattverstellvorrichtung bei Ausfall der Sicherheitskette, z.B. durch Kabelbruch, eine Sicherheitsfahrt einleitet.

Insbesondere zeichnet sich die Erfindung dadurch aus, dass eine im Wesentlichen synchrone Sicherheitsfahrt der Blattverstellvorrichtungen durchgeführt werden kann. Nachfolgend wird die erfindungsgemäße Lösung im Detail erklärt.

Beim Starten der Windturbine stehen die Rotorblätter normalerweise in der Fahnenposition und die Anlagensicherheitskette und die internen Sicherheitsketten sind geöffnet. Bevor die Rotorblätter die Fahnenposition verlassen können, ist es denkbar, dass die Funktion des Umrichters und der weiteren Komponenten der Blattverstellvorrichtung von der Steuereinheit der Blattverstellvorrichtung kontrolliert werden. Bei der Kontrolle werden die Betriebsparameter der überwachten Komponenten der Blattverstellvorrichtung mit vorher definierten unteren und/oder oberen Schwellwerten verglichen. Wenn die Betriebsparameter innerhalb des, von den Schwellwerten definierten, zugelassenen Bereichs liegen wird der Zustand der Komponente als in Ordnung, d.h. fehlerfrei, gesetzt.

Da der Umrichter aus einem ausgeschalteten Zustand keine Steuerspannung aus der Netzspannung erzeugen kann, kann der Umrichter zur Inbetriebnahme der Windturbine an eine allgemeine externe Steuerspannungsversorgung angeschlossen werden. Vorteilhafterweise hat die allgemeine externe Steuerspannungsversorgung denselben Spannungswert, wie die Betriebsspannung der Blattverstellvorrichtung, die normalerweise 24 Volt beträgt. Die externe Steuerspannungsversorgung kann zum Beispiel von einem Schaltschrank im Maschinenhaus der Windturbine über einen Schleifring an die Blattverstellvorrichtungen geliefert werden. Der Umrichter wird mit Hilfe der allgemeinen externen Steuerspannungsversorgung hochgefahren. Danach schaltet die Steuereinheit der Blattverstellvorrichtung eine Netzversorgung und eine, mit einem Spannungszwischenkreis des Umrichters verbindbare, Batterie zur Notversorgung der Blattverstellvorrichtung im Falle eines Ausfalls der Netzversorgung ein. Nachdem die Netzversorgung und die Batterie eingeschaltet worden sind, kann die Steuereinheit die Funktion der Batterie und der Netzversorgung überprüfen. Wenn keine Fehler vorhanden sind, wird über ein in einem Gleichspannungszwischenkreis des Umrichters angeordnetes Netzteil aus der Netzspannung eine interne Steuerspannung erzeugt. Das Netzteil ist dabei so ausgebildet, dass unabhängig von der im Gleichspannungszwischenkreis vorhandenen Spannung immer eine konstante, meist niedrigere, Spannung erzeugt wird. Da sich ein Fehler in der allgemeinen externen Steuerspannungsversorgung auf alle Blattverstellvorrichtungen gleichermaßen auswirken kann und ein Ausfall der Blattverstellvorrichtungen im schlimmsten Fall zu einer Zerstörung der gesamten Anlage führen könnte, wird die Steuerspannungsversorgung der Blattverstellvorrichtung vor dem Starten der Windturbine von der allgemeinen externen Versorgung auf die interne Versorgung mittels eines Schalters umgeschaltet. Die Steuerspannungsversorgungen der Blattverstellvorrichtungen können somit galvanisch komplett voneinander getrennt werden und ein Fehler in einer der Steuerspannungsversorgungen kann sich auf keiner Weise auf den anderen Steuerspannungsversorgungen auswirken.

Durch Umschalten auf die interne Steuerspannungsversorgung können die Blattverstellvorrichtungen entkoppelt von einander betrieben werden, somit kann sich ein Fehler in der Steuerspannungsversorgung nur auf eine Blattverstellvorrichtung auswirken. Die anderen Blattverstellvorrichtungen können dadurch trotz eines Ausfalls der Steuerspannungsversorgung der ersten Blattverstellvorrichtung ihre Rotorblätter in Fahnenstellung stellen und somit die Windturbine abbremsen. Bevor die allgemeine externe Steuerspannungsversorgung abgeschaltet und die interne Steuerspannungsversorgung eingeschaltet wird, kann eine weitere Funktionsprüfung der Komponenten der Blattverstellvorrichtung durchgeführt werden. Wenn diese Funktionsprüfung auch zeigt, dass keine Fehler vorhanden sind und die Betriebsparameter innerhalb eines zugelassenen Bereichs sind, wird auf interne Steuerspannungsversorgung umgeschaltet und die Steuereinheit der Blattverstellvorrichtung kann die interne Sicherheitskette schließen und ein Signal zum Schließen der Anlagensicherheitskette an den Schalter der Anlagensicherheitskette schicken. Ein Signal zum Melden der Betriebsbereitschaft kann auch an die Turbinensteuerung geschickt werden.

Nachdem alle internen Sicherheitsketten und die Kette von Notausschaltern geschlossen worden sind, und die Turbinensteuerung Betriebsbereitschaft gemeldet hat, kann auch die Anlagensicherheitskette geschlossen werden. Durch Schließen der Anlagensicherheitskette erhält die Blattverstellvorrichtung ein Signal mit hoher Spannung, welches einer binären Eins entspricht, und ein Verlassen der Fahnenstellung wird freigegeben.

Während des Betriebs der Windturbine können die kritischen Funktionen des Umrichters und der weiteren Komponenten der Blattverstellvorrichtung kontinuierlich von der Steuereinheit der jeweiligen Blattverstellvorrichtung überwacht werden. Der Zustand der Blattverstellvorrichtung wird von der Steuereinheit der Blattverstellvorrichtung an die Turbinensteuerung weitergeleitet. Wenn ein Fehler in einem der Blattverstellvorrichtungen erkannt wird, steuert die Turbinensteuerung im Normalfall die Blattverstellvorrichtungen so an, dass eine synchrone Fahrt der Rotorblätter in Richtung Fahnenposition eingeleitet wird. Bei nicht kritischen Fehlern wird vorteilhafterweise eine langsame Fahrt, mit einer im Verhältnis zu der maximalen Winkelgeschwindigkeit reduzierten Winkelgeschwindigkeit, in Richtung Fahnenstellung durchgeführt, da somit die Belastungen an der Windturbine niedrig gehalten werden. Diese Blattfahrt kann über die direkte Verbindung zwischen den Steuereinheiten der Blattverstellvorrichtungen und die Turbinensteuerung angesteuert werden.

Bei kritischen Fehlern können die Rotorblätter durch eine Sicherheitsfahrt in die Fahnenstellung gefahren werden. Bei der Sicherheitsfahrt werden die Rotorblätter mit maximaler Winkelgeschwindigkeit der Blattverstellvorrichtung aus dem Wind gedreht was eine schnelle Abbremsung der Windturbine ermöglicht. Durch die schnelle Abbremsung wird die Windturbine aber hohe Belastungen ausgesetzt, da die Kraft, die auf den Rotorblättern wirkt, ruckartig weggenommen wird. Zum Starten der Sicherheitsfahrt wird die Anlagensicherheitskette von der Turbinensteuerung geöffnet. Aus Redundanzgründen kann aber auch ein Signal über die direkte Verbindung zwischen den Steuereinheiten der Blattverstellvorrichtungen und die Turbinensteuerung geschickt werden. Da die Signalübertragung über die Anlagensicherheitskette aber viel schneller ist wird dieses Signal zuerst an den Steuereinheiten ankommen. Messungen an einer Turbine haben ergeben, dass ein Starten einer Blattfahrt über die direkte Verbindung zwischen Steuereinheiten der Blattverstellvorrichtungen und Turbinensteuerung zwischen 50 und 200 Millisekunden dauern kann, wobei ein Start über die Anlagensicherheitskette nur um die 5 Millisekunden dauert. Durch Öffnen der Anlagensicherheitskette ändert sich das an den Signaleingängen der Steuereinheiten anliegende Signal und die Steuereinheiten starten Synchron die Sicherheitsfahrten der Rotorblätter. Dadurch entsteht keine Unwucht im Rotor durch unterschiedliche Anstellwinkel der Rotorblätter. Während des Blattverstellvorganges und nach Erreichen der Fahnenposition kann die Blattverstellvorrichtung an der internen Spannungsversorgung bleiben. Nach Erreichen der Fahnenstellung ist es denkbar, dass die Funktion der Komponenten der Blattverstellvorrichtung und des Umrichters überprüft werden. Wenn ein Fehler gefunden wird, schaltet sich die Windturbine ab; ansonsten wird ein neuer Startversuch durchgeführt.

Im Falle eines Ausfalls der internen Spannungsversorgung während des Betriebs, zum Beispiel aufgrund von Wegfall der Stromversorgung vom Netz, kann die Batterie zur Notstromversorgung der Blattverstellvorrichtung zugeschaltet werden. Die Batterie versorgt den Gleichspannungszwischenkreis des Umrichters mit einer Spannung, so dass der Umrichter den Verstellmotor mit Betriebsspannung versorgen kann. Um den Umrichter weiter betreiben zu können wird über das im Spannungszwischenkreis angeordnete Netzteil eine Steuerspannung von der Batterie abgeleitet. Somit kann die Funktion der Blattverstellvorrichtung aufrechterhalten werden.

Stellt die Turbinensteuerung einen Ausfall der Netzversorgung fest, kann die Turbinensteuerung die Blattverstellvorrichtungen ansteuern, die Rotorblätter in Richtung Fahnenstellung zu fahren. Abhängig von der Art des Fehlers kann entweder eine langsame Fahrt oder eine Sicherheitsfahrt durchgeführt werden. Bei Erreichen der Fahnenstellung kann, um die Batterien nicht zu tief zu entladen, nach einer gewissen Zeit die Batterie getrennt und die externe allgemeine Spannungsversorgung eingeschaltet werden. Bei kritischen Fehlern, zum Beispiel bei Ausfall der internen Spannungsversorgung trotz vorhandener Netzspannung, ist es denkbar, dass die Spannungsversorgung durch die Batterie schon vor Ablauf einer vorgegebenen Zeit abgeschaltet und die externe allgemeine Steuerspannung von der Steuereinheit der Blattverstellvorrichtung zugeschaltet wird, um somit die Blattverstellvorrichtung auf Fehler überprüfen zu können. Bei Rückkehr der Netzspannung kann dann ein neuer Startvorgang der Windturbine automatisch eingeleitet werden.

Weitere Einzelheiten der Erfindung gehen aus den Zeichnungen anhand der Beschreibung hervor.

In den Zeichnungen zeigen
- Fig. 1: eine Windturbine,
- Fig. 2: eine Verstellvorrichtung der Windturbine,
- Fig. 3: Funktion der internen Sicherheitskette in der Steuerung der Blattverstellvorrichtung
- Fig. 4: eine Anlagensicherheitskette der Windturbine.

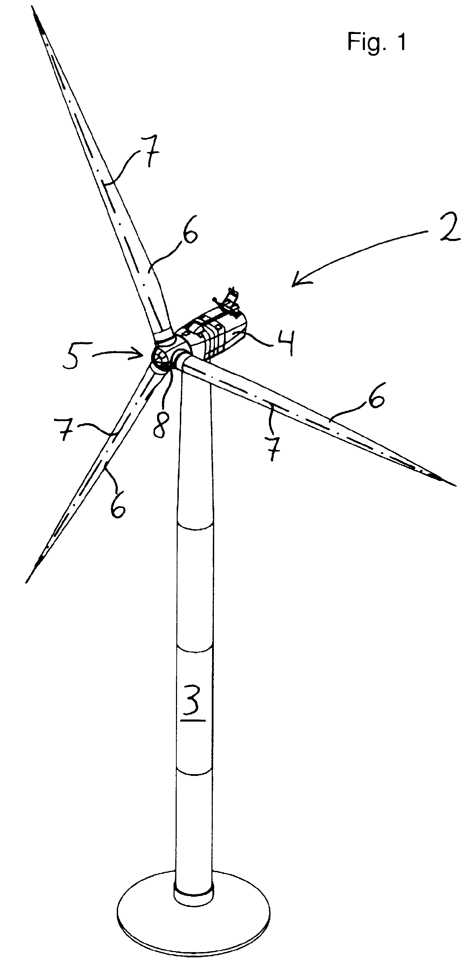

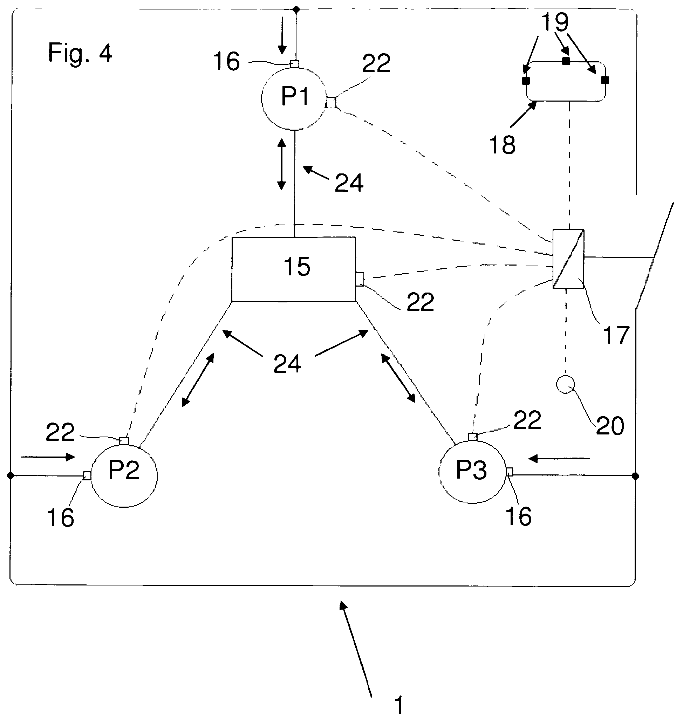

In Figur 1 ist eine Windturbine 2 mit einem Turm 3, einem auf den Turm 3 drehbar gelagerten Maschinenhaus 4 und ein über eine Rotorwelle mit einem in dem Maschinenhaus 4 angeordneten Generator verbundener Rotor 5 dargestellt. Der Rotor 5 umfasst eine Nabe 8, drei jeweils um eine Blattachse 7 drehbar gelagerte Rotorblätter 6 und ein zwischen Nabe 8 und Rotorblatt 6 montiertes Lager. Jedes Rotorblatt 6 umfasst eine Blattverstellvorrichtung P1, P2, P3 (Fig. 4) zum Verstellen der Anstellposition des Rotorblatts 6 und eine Bremse zum Halten des Rotorblatts in einer gewünschten Anstellposition. Die Blattverstellvorrichtung P1, P2, P3 umfasst einen Verstellmotor 9, ein auf einer Ausgangswelle 10 des Verstellmotors 9 angeordnetes Antriebsritzel 11, einen mit dem Antriebsritzel 11 in Eingriff stehenden Zahnkranz, einen Umrichter 12 zum Speisen eines Stroms und/oder einer Spannung an den Verstellmotor 9 und eine Steuereinheit 13 zum Steuern und/oder Regeln des Umrichters 12.

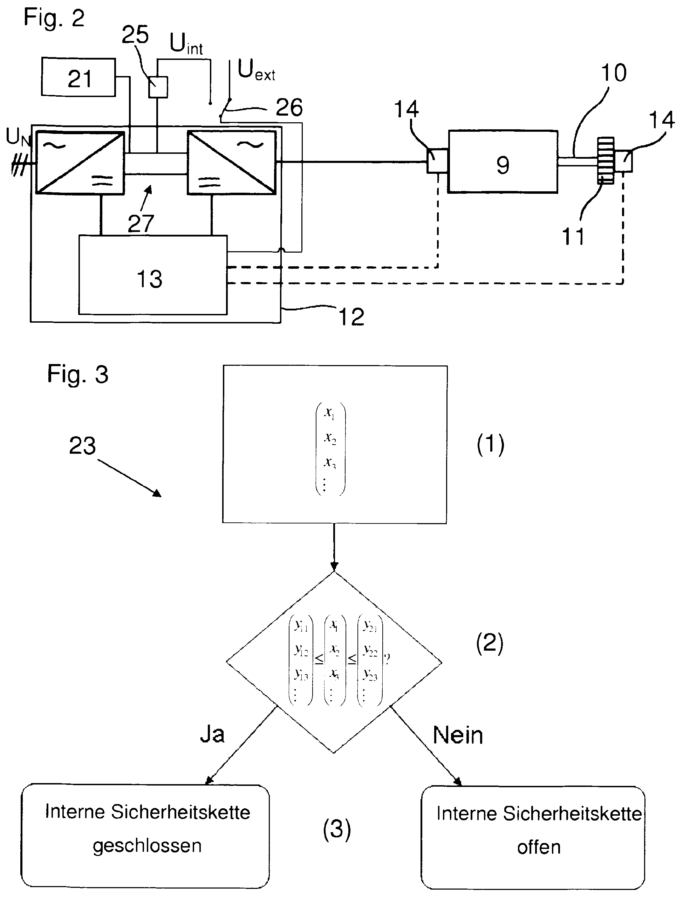

Figur 2 zeigt die Blattverstellvorrichtung P1, P2, P3 der Windturbine 2. Die Verstellung des Rotorblatts 6 erfolgt über den mit der Nabe 8 verbundenen Verstellmotor 9, der über ein auf einer Antriebswelle 10 des Verstellmotors 9 befestigbares Antriebsritzel 11 das auf der Nabe 8 drehbar gelagerte Rotorblatt 6 antreibt. Die Blattverstellvorrichtungen P1, P2, P3 werden über jeweils einen Umrichter 12 mit Betriebsspannung versorgt. Zum Steuern oder Regeln der von dem Umrichter 12 an dem Verstellmotor 9 abgegebenen Betriebsspannung und zum Überwachen der Zustände und Funktionen der Komponenten in der Blattverstellvorrichtung P1, P2, P3 umfassen die Blattverstellvorrichtungen P1, P2, P3 auch jeweils eine Steuereinheit 13. Die Steuereinheit 13 ist in diesem Ausführungsbeispiel in dem Umrichter 12 integriert.

Zum Hochfahren der Blattverstellvorrichtung P1, P2, P3 wird die Steuereinheit 13 des Umrichters 12 der Blattverstellvorrichtung P1, P2, P3 von einer allgemeinen externen Steuerspannung Uₑₓₜ versorgt. Nachdem die Steuereinheit 13 den Umrichter 12 hochgefahren hat, wird die Netzversorgung U_{N} und die Batterie 21 zur Notversorgung der Blattverstellvorrichtung P1, P2, P3 eingeschaltet. Nach Prüfen der Batterie 21 und der Netzversorgung U_{N} auf Fehler und sofern keine Fehler vorhanden sind, erzeugt der Umrichter 12 der Blattverstellvorrichtung P1, P2, P3 über das in dem Gleichspannungszwischenkreis 27 angeordnete Netzteil 25 aus der Netzspannung U_{N} eine interne Steuerspannung Uᵢₙₜ. Nach Überprüfung der internen Steuerspannung Uᵢₙₜ wird, sofern keine Fehler vorhanden sind, über einen Schalter 26 von der allgemeinen externen Steuerspannung auf die interne Steuerspannung geschaltet und die Steuereinheit 13 des Umrichters 12 wird von der internen Steuerspannung Uᵢₙₜ versorgt. Der Schalter 26 kann dabei mit der Steuereinheit 13 verbunden sein und kann von der Steuereinheit 13 angesteuert werden. Zum Beenden des Blattverstellvorganges ist die Steuereinheit 13 mit mehreren Endlagenschaltern 14 verbunden die bei Erreichen einer bestimmten Anstellposition ein Signal an die Steuereinheit 13 senden. Die Funktion der Komponenten der Blattverstellvorrichtung P1, P2, P3 wird über eine interne Sicherheitskette 23, die in der Steuereinheit 13 integriert ist, überwacht.

Figur 3 zeigt die Funktionsweise der in die Steuereinheit 13 des Umrichters 12 integrierten internen Sicherheitskette 23. Zur Überprüfung der Funktion und den Zustand der Komponenten der Blattverstellvorrichtung P1, P2, P3 schickt die Steuereinheit 13 in Schritt (1) eine Anfrage an den jeweiligen Komponenten der Blattverstellvorrichtung P1, P2, P3. Die Komponenten beantworten die Anfrage mit den jeweiligen Betriebsparametern x₁₋ₙ. In Schritt (2) werden die Betriebsparameter x₁₋ₙ mit in einem Speichermodul der Steuereinheit 13 abgelegten Schwellwerten y₁₁₋₁ₙ und y₂₁₋₂ₙ verglichen. Die Betriebsparameter können unter anderem Zustände wie Temperatur, Position, Spannung, Vibrationen und Drehzahl sein und kontrolliert, dass die Zustände innerhalb den von den Schwellwerten y₁₁₋₁ₙ und y₂₁₋₂ₙ definierten zugelassenen Bereich liegen. Wenn die überwachten Betriebsparameter in Ordnung sind wird ein Signal zum Schließen der Anlagensicherheitskette 1 an den Schalter 17 geschickt, ansonsten wird ein Signal zum Öffnen der Anlagensicherheitskette an den Schalter 17 geschickt. Die Steuereinheit 13 meldet auch Betriebsbereitschaft, d.h. keine Fehler vorhanden, an die Turbinensteuerung 15.

In Figur 4 ist eine Anlagensicherheitskette 1 mit den Blattverstellvorrichtungen P1, P2, P3 der drei Rotorblätter 6, eine Turbinensteuerung 15 und die Kommunikationswege der Komponenten dargestellt. Die Blattverstellvorrichtungen P1, P2, P3 sind über ihre Steuereinheiten 13 mit der Turbinensteuerung 15 über den Kommunikationsweg 24 verbunden und können darüber sowohl Daten an die Turbinensteuerung 15 senden, als auch von der Turbinensteuerung 15 empfangen. Bei normalem Betrieb der Windturbine 2 wird die Kommunikation und die Regelung der Blattverstellvorrichtungen P1, P2, P3 über den Kommunikationsweg 24 geleitet. Zusätzlich zu der Kommunikation zwischen Steuereinheit 13 und Turbinensteuerung 15 sind die in den Steuereinheiten 13 der Blattverstellvorrichtungen P1, P2, P3 integrierten internen Sicherheitsketten 23 und die Turbinensteuerung 15 über mindestens einen Schalter 17 mit der Anlagensicherheitskette 1 verbunden, sodass sie die Anlagensicherheitskette 1 öffnen und/oder schließen können. Es können auch weitere Systeme an den Schalter 17 zum Öffnen und/oder Schließen der Anlagensicherheitskette 1 angeschlossen werden. Diese Systeme können z.B. eine Kette 18 von Notausschaltern 19 zum manuellen öffnen der Anlagensicherheitskette 1 oder einen Sensor 20 zum Überwachen von Betriebsparametern der Windturbine 2, wie zum Beispiel Temperatur, Vibrationen und/oder Drehzahl, sein. Vorteilhafterweise sind die Systeme zum Öffnen und/oder Schließen der Anlagensicherheitskette 1 über jeweils einen eigenen Schalter 17 mit der Anlagensicherheitskette 1 verbunden. Die Anlagensicherheitskette 1 ist mit Signaleingängen 16 der Blattverstellvorrichtungen P1, P2, P3 und der Turbinensteuerung 15 verbunden. Bei geschlossener Anlagensicherheitskette wird ein Signal mit einer hohen Spannung von der Anlagensicherheitskette 1 an die Steuereinheiten 13 der Blattverstellvorrichtungen P1, P2, P3 zum Freigeben eines Blattverstellvorgangs gesendet. Bei geöffneter Anlagensicherheitskette 1 fließt kein Strom durch die Anlagensicherheitskette 1, somit liegt auch keine Spannung an den an der Anlagensicherheitskette 1 angeschlossenen Komponenten an. Die Spannung des Signals ändert sich also bei öffnen der Anlagensicherheitskette 1 von einem hohen in einem niedrigen Wert. Wenn die Steuereinheiten 13 der Blattverstellvorrichtungen P1, P2, P3 ein niedriges Signal von der Anlagensicherheitskette 1 erhalten wird die Freigabe zur Blattverstellung weggenommen und die Blattverstellvorrichtung P1, P2, P3 bleibt in Fahnenposition stehen oder leitet, wenn die Rotorblätter 6 nicht schon in Fahnenposition stehen, eine Sicherheitsfahrt ein.

Bei einer abgeschalteten Windturbine 2 stehen die Rotorblätter 6 in Fahnenstellung und sowohl die internen Sicherheitsketten der Blattverstellvorrichtungen P1, P2, P3 als auch die Anlagensicherheitskette 1 sind geöffnet. Da der Umrichter 12 aus einem ausgeschalteten Zustand keine Steuerspannung aus der Netzspannung U_{N} erzeugen kann, wird die Blattverstellvorrichtung P1, P2, P3 zum Hochfahren von einer allgemeinen externen Steuerspannung Uₑₓₜ versorgt. Bevor die Rotorblätter 6 die Fahnenposition verlassen können, wird der Zustand des Umrichters 12 und der weiteren Komponenten der Blattverstellvorrichtungen P1, P2, P3 überprüft. Sofern keine Fehler in den Blattverstellvorrichtungen P1, P2, P3 vorliegen, schaltet die Steuereinheit 13 der Blattverstellvorrichtung P1, P2, P3 die Netzspannung U_{N} und die Batterie 21 zur Notversorgung der Blattverstellvorrichtung ein. Danach wird die Batterie 21 und der Netzanschluss von der Steuereinheit 13 auf Fehler überprüft.

Wenn keine Fehler vorhanden sind, schaltet der Umrichter von der externen Spannungsversorgung Uₑₓₜ auf die, von dem im Gleichspannungszwischenkreis 27 angeordneten Netzteil 25 erzeugte, interne Steuerspannung Uᵢₙₜ um. Die interne Steuerspannungsversorgung Uᵢₙₜ ist dabei so ausgebildet, dass die Steuerspannungsversorgungen der Blattverstellvorrichtungen P1, P2, P3 galvanisch von einander getrennt sind und ein Fehler in einer der Steuerspannungsversorgungen sich nicht auf die anderen Steuerspannungsversorgungen auswirken kann. Die Funktionen der Blattverstellvorrichtung P1, P2, P3 werden ein weiteres Mal überprüft und wenn alles in Ordnung ist, wird die allgemeine externe Steuerspannungsversorgung Uₑₓₜ abgeschaltet und die interne Steuerspannungsversorgung Uᵢₙₜ eingeschaltet. Danach wird die interne Sicherheitskette in der Blattverstellvorrichtung geschlossen. Die Steuereinheit 13 schickt danach ein Signal an den Schalter 17 zum Schließen der Anlagensicherheitskette 1 und ein Signal zum melden der Betriebsbereitschaft an die Turbinensteuerung 15.

Wenn die Turbinensteuerung 15 und weitere mit der Anlagensicherheitskette 1 verbundenen Komponenten, wie z.B. mindestens einen Sensor 20, der Drehzahl und/oder Vibrationen misst und die Kette 18 von Notausschaltern 19 auch Betriebsbereitschaft melden, wird die Anlagensicherheitskette 1 geschlossen. Durch Schließen der Anlagensicherheitskette 1 kann wieder ein Strom durch die Anlagensicherheitskette fließen und ein Signal mit hoher Spannung liegt auf den Signaleingängen 16 der mit der Anlagensicherheitskette 1 verbundenen Steuereinheiten 13 auf. Wenn an dem Signaleingang 16 der Steuereinheit 13 der Blattverstellvorrichtungen P1, P2, P3 ein hohes Signal aufliegt, haben die Blattverstellvorrichtungen P1, P2, P3 die Erlaubnis, das Rotorblatt 6 aus der Fahnenposition zu bewegen und die Windturbine 2 kann gestartet werden.

Während des Betriebs der Windturbine 2 wird im Normalfall der Zustand der Blattverstellvorrichtungen P1, P2, P3 von den jeweiligen Steuereinheiten 13 kontinuierlich an die Turbinensteuerung 15 gesendet. Im Falle eines Fehlers in einer der Blattverstellvorrichtungen P1, P2, P3 wird dies zu der Turbinensteuerung 15 kommuniziert. Die Turbinensteuerung kommandiert danach entweder über die direkte Verbindung 24 oder über den Schalter 17 eine synchrone Fahrt der Rotorblätter 6 in Richtung Fahnenstellung.

Bei Ausfall der Netzversorgung wird die Notversorgung der Blattverstellvorrichtung P1, P2, P3 durch die Batterie 21 eingeschaltet. Die Batterie wird mit dem Gleichspannungszwischenkreis 27 des Umrichters verbunden und kann somit sowohl über den Umrichter 12 eine Betriebsspannung an den Verstellmotor 9 als auch über das Netzteil 25 eine Steuerspannung an die Steuereinheit 13 abgeben. Somit kann die Blattverstellvorrichtung P1, P2, P3 trotz eines Ausfalls der Netzspannung die Rotorblätter 6 in Fahnenposition stellen.

Bei kritischen Fehlern, z.B. bei Ausfall der Turbinensteuerung 15 oder bei fehlerhaften beziehungsweise gestörten Kommunikation zwischen Turbinensteuerung 15 und Steuereinheit 13 der Blattverstellvorrichtung P1, P2, P3, kann die Anlagensicherheitskette 1 von einer der Steuereinheiten 13 geöffnet werden. Beim Öffnen der Anlagensicherheitskette wird das Signal auf niedrig gesetzt und die Blattverstellvorrichtungen P1, P2, P3 leiten bei Erhalten des niedrigen Signals an den Signaleingang 16 der Steuereinheit 13 synchron eine Sicherheitsfahrt ein. Wenn die Steuereinheiten 16 der Blattverstellvorrichtungen P1, P2, P3 alle versagen, kann die Anlagensicherheitskette 1 auch von dem mindestens einen Sensor 20 oder von der Kette 18 von Notausschaltern 19 geöffnet werden.

Die in den beschriebenen Ausführungsbeispielen offenbarten Merkmalskombinationen sollen nicht limitierend auf die Erfindung wirken, vielmehr sind auch die Merkmale der unterschiedlichen Ausführungen miteinander kombinierbar.

**Bezugszeichenliste**

| | | | |
|---|---|---|---|
| 1 | Anlagensicherheitskette | 19 | Notausschalter |
| 2 | Windturbine | 20 | Sensor |
| 3 | Turm | 21 | Batterie |
| 4 | Maschinenhaus | 22 | Signalausgang |
| 5 | Rotor | 23 | Interne Sicherheitskette |
| 6 | Rotorblatt | 24 | Kommunikationsweg |
| 7 | Blattachse | 25 | Netzteil |
| 8 | Nabe | 26 | Schalter |
| 9 | Verstellmotor | 27 | Gleichspannungszwischenkreis |
| 10 | Antriebswelle | P1 | Blattverstellvorrichtung |
| 11 | Antriebsritzel | P2 | Blattverstellvorrichtung |
| 12 | Umrichter | P3 | Blattverstellvorrichtung |
| 13 | Steuereinheit | U_{N} | Netzspannung |
| 14 | Endlagenschalter | Uₑₓₜ | Externe Steuerspannungsversorgung |
| 15 | Turbinensteuerung | Uᵢₙₜ | Interne Steuerspannungsversorgung |
| 16 | Signaleingang | | |
| 17 | Schalter | | |
| 18 | Kette von Notausschaltern | | |

## Patentansprüche

1. Blattverstellvorrichtung (P1, P2, P3) für ein Rotorblatt (6) eines Rotors (5) einer Windturbine (2),
- wobei der Rotor (5) eine Nabe (8), mindestens ein um eine Längsachse (7) des Rotorblattes (6) drehbar an der Nabe (8) gelagertes Rotorblatt (6) umfasst und der Rotor (5) drehbar an einem Maschinenhaus (4) der Windturbine (2) angeordnet ist,
- das Rotorblatt (6) über die Blattverstellvorrichtung (P1, P2, P3) drehbar und in verschiedenen Anstellpositionen anhaltbar ist,
- die Windturbine (2) eine zentrale Turbinensteuerung (15) zum Überwachen von und Ansteuern von Komponenten in der Windturbine (2), unter anderem die Blattverstellvorrichtung (P1, P2, P3), aufweist,
- und wobei die Blattverstellvorrichtung (P1, P2, P3) einen Verstellmotor (9) zum Antreiben und/oder Festsetzen des Rotorblatts (6), einen Umrichter (12) zum Ansteuern des Verstellmotors (9), eine Steuereinheit (13) zum Ansteuern des Umrichters (12) und eine Batterie (21) zur Notversorgung der Blattverstellvorrichtung (P1, P2, P3) umfasst,
- die Blattverstellvorrichtung (P1, P2, P3) eine Anlagensicherheitskette (1) und eine in der Steuereinheit (13) der Verstellvorrichtung (P1, P2, P3) integrierte interne Sicherheitskette (23) aufweist,
**dadurch gekennzeichnet, dass** der Umrichter (12) ein Netzteil (25) zum Erzeugen einer internen Steuerspannung (Uᵢₙₜ) aus der Netzspannung (U_{N}) umfasst, wobei das Netzteil (25) in einem Gleichspannungszwischenkreis (27) des Umrichters (12) angeordnet ist.

2. Blattverstellvorrichtung (P1, P2, P3) nach Anspruch 1, **dadurch gekennzeichnet, dass** die Anlagensicherheitskette (1) mindestens einen Schalter (17) aufweist, der Schalter mit Signalausgängen (23) der Steuereinheit (13) der Blattverstellvorrichtung (P1, P2, P3) und der Turbinensteuerung (15) verbunden ist und die interne Sicherheitskette der Steuereinheit (13) und/oder die Turbinensteuerung (15) ausgebildet ist, Signale zum Öffnen und/oder Schließen der Anlagensicherheitskette (1) erzeugen und an den Schalter (17) abgeben zu können.

3. Blattverstellvorrichtung (P1, P2, P3) nach einem der vorangehenden Ansprüche, **dadurch gekennzeichnet, dass** die Anlagensicherheitskette (1) ein von dem Zustand der Anlagensicherheitskette (1) abhängiges Signal an einen Signaleingang (22) der Steuereinheit (13) der Blattverstellvorrichtung (P1, P2, P3) und/oder der Turbinensteuerung (15) abgibt.

4. Blattverstellvorrichtung (P1, P2, P3) nach Anspruch 3, **dadurch gekennzeichnet, dass** das Signal zwei verschiedene Zustände aufweisen kann, wobei das Signal bei geschlossener Anlagensicherheitskette (1) einen hohen Spannungswert und bei geöffneter Anlagensicherheitskette (1) einen niedrigen Spannungswert aufweist.

5. Blattverstellvorrichtung (P1, P2, P3) nach einem der vorangehenden Ansprüche, **dadurch gekennzeichnet, dass** die Steuereinheit (13) des Umrichters (12) der Blattverstellvorrichtung (P1, P2, P3) mit einer allgemeinen externen Steuerspannungsversorgung (Uₑₓₜ) und der internen Steuerspannungsversorgung (Uᵢₙₜ) verbindbar ist.

6. Blattverstellvorrichtung (P1, P2, P3) nach Anspruch 5, **dadurch gekennzeichnet, dass** die Steuereinheit (13) des Umrichters (12) der Blattverstellvorrichtung (P1, P2, P3) bei Inbetriebnahme von der allgemeinen externen Steuerspannung (Uₑₓₜ) versorgt wird.

7. Blattverstellvorrichtung (P1, P2, P3) nach Anspruch 5 oder 6, **dadurch gekennzeichnet, dass** die Steuereinheit (13) des Umrichters (12) der Blattverstellvorrichtung (P1, P2, P3) bei geschlossener internen Sicherheitskette von der internen Steuerspannung (Uᵢₙₜ) versorgt wird.

8. Windturbine (2) mit einem auf einem Turm (3) drehbar gelagerten Maschinenhaus (4) und einem über eine Antriebswelle (10) mit einem im Maschinenhaus (4) montierten Generator verbundenen Rotor (5), wobei der Rotor (5) eine Nabe (8) und mindestens ein Rotorblatt (6) umfasst, das Rotorblatt (6) um seine in axialer Richtung verlaufende Blattachse (7) drehbar über ein Lager mit der Nabe (8) verbunden ist, und das Rotorblatt (6) von einer Blattverstellvorrichtung (P1, P2, P3) angetrieben und in verschiedene Anstellpositionen angehalten werden kann, **dadurch gekennzeichnet, dass** die Blattverstellvorrichtung (P1, P2, P3) nach einem oder mehreren der vorangestellten Ansprüche ausgebildet ist.

9. Verfahren zum Hochfahren einer Windturbine (2), wobei die Windturbine (2) eine Blattverstellvorrichtung nach einem der Ansprüche 1 bis 7 umfasst, die Rotorblätter (6) in der Ausgangsposition in Fahnenposition stehen und das Verfahren folgende Schritte umfasst:
- Versorgen der Steuereinheit 13 des Umrichters 12 der Blattverstellvorrichtung (P1, P2, P3) über eine allgemeine externe Steuerspannungsversorgung Uₑₓₜ,
- Hochfahren des Umrichters (12),
- Überprüfen der Funktion des Umrichters (12) und/oder der weiteren Komponenten der Blattverstellvorrichtung (P1, P2, P3) durch die Steuereinheit (13) der Blattverstellvorrichtung (P1, P2, P3),
- Zuschalten der Batterie (21) und der Netzversorgung (U_{N}),
- Durchführen einer Funktionsüberprüfung der Batterie (21) und der Netzversorgung (U_{N}) durch die Steuereinheit (13) der Verstellvorrichtung (P1, P2, P3),
- sofern keine Fehler vorhanden, Erzeugen einer internen Steuerspannung (Uᵢₙₜ) durch das in dem Gleichspannungszwischenkreis (27) des Umrichters angeordnete Netzteil (25),
- Durchführen einer Funktionsüberprüfung der internen Steuerspannungsversorgung Uᵢₙₜ durch die Steuereinheit (13) der Blattverstellvorrichtung (P1, P2, P3),
- wenn interne Steuerspannungsversorgung Uᵢₙₜ in Ordnung ist, Umschalten von der allgemeinen externen Steuerspannungsversorgung (Uₑₓₜ) auf die interne Steuerspannung (Uᵢₙₜ) und Schließen der internen Sicherheitskette,
- sofern die internen Sicherheitsketten der Blattverstellvorrichtungen (P1, P2, P3) geschlossen sind und auch die Turbinensteuerung (15) Betriebsbereitschaft meldet, Schließen der Anlagensicherheitskette (1),
- Setzen des Signals in der Anlagensicherheitskette (1) auf hoch zum Freigeben eines Verlassens der Fahnenposition.

10. Verfahren nach Anspruch 9, wobei das Verfahren bei normalem Betrieb der Windturbine (2) folgende Schritte umfasst:
- Überwachen von kritischen Funktionen des Umrichters (12) und/oder der Komponenten der Blattverstellvorrichtung (P1, P2, P3) durch die Steuereinheit (13) der Blattverstellvorrichtung (P1, P2, P3),
- Senden des Zustands der Blattverstellvorrichtung (P1, P2, P3) an die Turbinensteuerung (15),
bei Feststellen eines Fehlerzustandes:
- Blattverstellvorrichtungen (P1, P2, P3) werden von der Turbinensteuerung (15) angesteuert, eine langsame synchrone Fahrt in Richtung Fahnenstellung einzuleiten,
- Blattverstellvorrichtungen (P1, P2, P3) bleiben während der Sicherheitsfahrt und in der Fahnenposition an der internen Spannungsversorgung (Uᵢₙₜ),
- Überprüfen der Funktion des Umrichters (12) und/oder der Komponenten der Blattverstellvorrichtung (P1, P2, P3) und wenn alles in Ordnung, erneuter Startversuch.

11. Verfahren nach Anspruch 9, wobei das Verfahren bei Ausfall der Netzspannung folgende Schritte umfasst:
- Batterie (12) zum Notversorgen der Blattverstellvorrichtung (P1, P2, P3) wird zugeschaltet,
- Sicherheitsfahrt der Blattverstellvorrichtungen (P1, P2, P3) wird von der Turbinensteuerung (15) angesteuert
- bei Erreichen der Fahnenstellung wird nach einer gewissen Zeit die Batterie (12) getrennt und die externe allgemeine Spannungsversorgung (Uₑₓₜ) eingeschaltet,
- bei kritischen Fehlern, Schalten auf externe allgemeine Spannungsversorgung (Uₑₓₜ) vor Ablauf der Zeit und öffnen der Anlagensicherheitskette (1),
- Überprüfen der Funktion des Umrichters (12) und/oder der weiteren Komponenten der Blattverstellvorrichtung (P1, P2, P3) und wenn alles in Ordnung erneuter Startversuch.

12. Verfahren nach Anspruch 9, wobei das Verfahren bei kritischen Fehlern z.B. Ausfall der Turbinensteuerung (15) oder kritischem Fehler in der Blattverstellvorrichtung (P1, P2, P3), folgende Schritte umfasst:
- Erfassen eines Fehlerzustandes durch die Steuereinheit (13) der Verstellvorrichtung (P1, P2, P3),
- Öffnen der internen Sicherheitskette in der Steuereinheit (13) und somit Öffnen der Anlagensicherheitskette (1),
- Signal wird durch Öffnen der Anlagensicherheitskette (1) auf niedrig gesetzt,
- bei Erhalten des niedrigen Signals, simultaner Sicherheitsfahrt der Blattverstellvorrichtungen (P1, P2, P3).

## Claims

1. Blade adjusting device (P1, P2, P3) for a rotor blade (6) of a rotor (5) of a wind turbine (2),
- whereas the rotor (5) comprises a hub (8), at least one rotor blade rotatably mounted around a longitudinal axis (7) of the rotor blade (6) mounted on the hub (8) and the rotor (5) is rotatably arranged on a nacelle (4) of the wind turbine (2),
- the rotor blade (6) is rotatable over the blade adjusting device (P1, P2, P3) and stoppable in different pitching positions,
- the wind turbine (2) comprises a central turbine control (15) for monitoring and actuating of components of the wind turbine (2), amongst others the blade adjusting device (P1, P2, P3),
- and whereas the blade adjusting device (P1, P2, P3) comprises a servomotor (9) for driving and/or fixing the rotor blade (6), a converter (12) for actuating the servomotor (9), a control unit (13) for actuating the converter (12) and a battery (21) for the emergency supply of the blade adjusting device (P1, P2, P3),
- the blade adjusting device (P1, P2, P3) comprises a turbine safety chain (1) and an internal safety chain (23) integrated in the control unit (13) of the adjusting device (P1, P2, P3),
**characterized in that** the converter (12) comprises a power supply (25) for the creation of an internal control voltage (Uᵢₙₜ) from the power supply voltage (U_{N}), whereas the power supply (25) is arranged in a direct current link (27) of the converter (12).

2. Blade adjusting device (P1, P2, P3) according to claim 1, **characterized in that** the turbine safety chain (1) comprises at least one switch (17), the switch being connected with signal outputs (23) of the control unit (13) of the blade adjusting device (P1, P2, P3) and the turbine control (15) and that the internal safety chain of the control unit (13) and/or the turbine control (15) is designed to create signals to open and/or lock the turbine safety chain (1) and to release it to the switch (17).

3. Blade adjusting device (P1, P2, P3) according to one of the previous claims, **characterized in that** the turbine safety chain (1) releases a signal which depends on the status of the turbine safety chain (1) to a signal input (22) of the control unit (13) of the blade adjusting device (P1, P2, P3) and/or the turbine control (15).

4. Blade adjusting device (P1, P2, P3) according to claim 3, **characterized in that** the signal possesses two different states, whereas the signal possesses a high voltage value when the turbine safety chain (1) is locked and a low voltage value when the turbine safety chain (1) is open.

5. Blade adjusting device (P1, P2, P3) according to one of the previous claims, **characterized in that** the control unit (13) of the converter (12) of the blade adjusting device (P1, P2, P3) is combinable with a general external control voltage supply (Uₑₓₜ) and the internal control voltage supply (Uᵢₙₜ).

6. Blade adjusting device (P1, P2, P3) according to claim 5, **characterized in that** the control unit (13) of the converter (12) of the blade adjusting device (P1, P2, P3) is supplied by the general external control voltage (Uₑₓₜ) at commissioning.

7. Blade adjusting device (P1, P2, P3) according to claim 5 or 6, **characterized in that** the control unit (13) of the converter (12) of the blade adjusting device (P1, P2, P3) is supplied by the internal control voltage (Uᵢₙₜ) when the internal safety chain is locked.

8. Wind turbine (2) with a nacelle (4) rotatably mounted on a tower (3) and a rotor (5) connected via a drive shaft (10) to a generator mounted on the nacelle (4), whereas the rotor (5) comprises a hub (8) and at least one rotor blade (6), the rotor blade (6) being rotatably linked around its own in axial direction continuing blade axis (7) with the hub (8) via a bearing, and the rotor blade (6) can be driven by a blade adjusting device (P1, P2, P3) and stopped in different pitching positions, **characterized in that** the blade adjusting device (P1, P2, P3) is designed according to one or more of the previous claims.

9. Method to drive a wind turbine (2), whereas the wind turbine (2) comprises a blade adjusting device according to claim 1 to 7, the rotor blades (6) being in the starting position in vane position and the method comprises the following steps:
- supply of the control unit (13) of the converter (12) of the blade adjusting device (P1, P2, P3) via a general external control power supply system Uₑₓₜ,
- driving of the converter (12),
- testing the function of the converter (12) and/or the further components of blade adjusting device (P1, P2, P3) by means of the control unit (13) of the blade adjusting device (P1, P2, P3),
- connecting the battery (21) and the power supply (U_{N}),
- executing a function test of the battery (21) and the power supply (U_{N}) by means of the control unit (13) of the blade adjusting device (P1, P2, P3),
- unless there are no errors, creating an internal control voltage (Uᵢₙₜ) by means of the power supply (25) arranged in the direct current link (27) of the converter,
- execution of a function test of the internal control voltage supply (Uᵢₙₜ) by means of the control unit (13) of the blade adjusting device (P1, P2, P3),
- if the internal control voltage supply (Uᵢₙₜ) is in order, switching from general external control voltage supply (Uₑₓₜ) to internal control voltage (Uᵢₙₜ) and locking of the internal safety chain.
- provided that the internal safety chains of the blade adjusting device (P1, P2, P3) are locked and the turbine control (15) reports operational availability, locking of the turbine safety chain (1),
- setting the signal to high in the turbine safety chain (1) for releasing the leaving of the vane position.

10. Method according to claim 9, whereas the method comprises the following steps at normal operation of the wind turbine (2):
- monitoring of critical functions of the converter (12) and/or the components of the blade adjusting device (P1, P2, P3) by means of the control unit (13) of the blade adjusting device (P1, P2, P3),
- sending the status of the blade adjusting device (P1, P2, P3) to the turbine control (15),
at detection of an error status:
- blade adjusting devices (P1, P2, P3) are actuated from the turbine control (15) to initiate a slow synchronous drive in direction vane position,
- blade adjusting devices (P1, P2, P3) stay on the internal voltage supply (Uᵢₙₜ) during the safety drive and in the vane position,
- examining the function of the converter (12) and/or the components of the blade adjusting device (P1, P2, P3) and a new start attempt if everything is in order.

11. Method according to claim 9, whereas the method comprises the following steps at failure of power supply voltage:
- battery (12) for emergency supply of blade adjusting devices (P1, P2, P3) is connected,
- safety drive of blade adjusting devices (P1, P2, P3) is activated from the turbine control (15),
- at arrival of the vane position, the battery (12) is disconnected for a certain time and the external general voltage supply (Uₑₓₜ) is activated,
- at critical errors, switch to external general voltage supply (Uₑₓₜ) before time expiry and opening of the turbine safety chain (1),
- examining of function of the converter (12) and/or further components of the blade adjusting device (P1, P2, P3) and new start attempt if everything is in order.

12. Method according to claim 9, whereas the method comprises the following steps at critical errors, e.g. failure of the turbine control (15) or critical error in the blade adjusting device (P1, P2, P3):
- determining an error status by means of a control unit (13) of the adjusting device (P1, P2, P3),
- opening the internal safety chain in the control unit (13) and therefore opening of the turbine safety chain (1),
- signal is set to low by opening the turbine safety chain (1),
- at receipt of the low signal, simultaneous safety drive of the blade adjusting devices (P1, P2, P3).

## Revendications

1. Dispositifs de réglage de pale (P1, P2, P3) pour une pale (6) d'un rotor (5) d'une éolienne (2),
- tandis que le rotor (5) constitué d'un moyeu (8), d'au moins une pale montée en rotation autour d'un axe longitudinal (7) de la pale (6) montée sur le moyeu (8) et le rotor (5) étant lui-même installé en rotation sur une nacelle (4) de l'éolienne (2),
- la pale (6) tourne grâce au dispositif de réglage de pale (P1, P2, P3) et s'arrêter dans différentes positions de tangage,
- l'éolienne (2) comprend un contrôleur central de turbine (15) pour la surveillance et d'actionnement des composants de l'éolienne (2), incluant le dispositif de réglage de la lame (P1, P2, P3)
- et où que le dispositif de réglage de pale (P1, P2, P3) comprend un servomoteur (9) pour l'entraînement et / ou l'arrêt de la pale de rotor (6), un convertisseur (12) pour actionner le servomoteur (9), une unité de control (13) pour actionner le convertisseur (12) et une batterie (21) pour l'alimentation de secours du dispositif de réglage de pale (P1, P2, P3)
- le dispositif à lame de réglage (P1, P2, P3) comprend une chaîne de sécurité de la turbine (1) et une chaîne de sécurité interne (23) intégrée à l'unité de control (13) du dispositif de réglage (P1, P2, P3),
**caractérisé en ce que** le convertisseur (12) comprend une alimentation électrique (25) pour la création d'une tension de commande interne (Uᵢₙₜ) à partir de la tension d'alimentation (UN), considérant que l'alimentation électrique (25) est générée par un circuit intermédiaire de courant continue (27) du convertisseur (12).

2. Dispositif de réglage de pale (P1, P2, P3) selon la revendication 1, **caractérisé en ce que** la chaine de sécurité de la turbine (1) comporte au moins un interrupteur (17), l'interrupteur étant connecté à des signaux de sorties (23) de l'unité de control (13) du dispositif de réglage de pale (P1, P2, P3) et au contrôleur central de la turbine (15) et que la chaîne de sécurité interne de l'unité de control (13) et / ou le contrôleur de la turbine (15) est conçu pour créer un signal d'ouverture et / ou de fermeture de la chaîne de sécurité de la turbine (1) et de le transmettre à l'interrupteur (17).

3. Dispositif de réglage de pale (P1, P2, P3) selon l'une quelconque des revendications précédentes, **caractérisé en ce que** la chaîne de sécurité de la turbine (1) transmet un signal qui dépend de l'état de la chaîne de sécurité de la turbine (1) au signal d'entrée (22) de l'unité de control (13) du dispositif de réglage de la pale (P1, P2, P3) et / ou du contrôleur de la turbine (15).

4. Dispositif de réglage de pale (P1, P2, P3) selon la revendication 3, **caractérisé en ce que** le signal possède deux états différents, alors que le signal possède une valeur de tension élevée lorsque la chaîne de sécurité de la turbine (1) est verrouillée et une valeur de tension faible lorsque la chaîne de sécurité de la turbine (1) est ouverte.

5. Dispositif de réglage de la pale (P1, P2, P3) selon l'une quelconque des revendications précédentes, **caractérisé en ce que** le dispositif de l'unité de control (13) du convertisseur (12) du dispositif de réglage de la pale (P1, P2, P3) est combinable avec une alimentation de tension de commande générale externe (Uₑₓₜ) et l'alimentation de tension de commande interne (Uᵢₙₜ).

6. Dispositif de réglage de la pale (P1, P2, P3) selon la revendication 5, **caractérisée en ce que** l'unité de commande (13) du convertisseur (12) du dispositif de réglage de pale (P1, P2, P3) est alimenté par la tension de commande externe générale (Uext) à la mise en service.

7. Dispositif de réglage de la pale (P1, P2, P3) selon la revendication 5 ou 6, **caractérisé en ce que** l'unité de control (13) du convertisseur (12) du dispositif de réglage de la pale (P1, P2, P3) est alimenté par la tension de commande interne (Uᵢₙₜ) lorsque la chaîne de sécurité interne est verrouillée.

8. Eolienne (2) avec une nacelle (4) montée en rotation sur une tour (3) et un rotor (5) relié par l'intermédiaire d'un arbre d'entraînement (10) à un générateur monté sur la nacelle (4), où le rotor (5) comporte un moyeu (8) et au moins une pale (6), la pale (6) étant reliée de manière rotative autour de son propre axe dans la direction axiale continue de la pale (7) avec le moyeu (8) par l'intermédiaire d'un palier, et la pale (6) peut être entraîné par un dispositif de réglage de pale (P1, P2, P3) et arrêté dans différentes positions de tangage, **caractérisé en ce que** le dispositif de réglage de pale (P1, P2, P3) est conçu selon l'une ou plusieurs des revendications précédentes.

9. Procédé pour démarrage une éolienne (2), considérant que l'éolienne (2) comprend un dispositif réglage de pale selon la revendication 1 à 7, les pales de rotor (6) se trouvant dans la position de démarrage en drapeau et le procédé comprend les étapes suivantes:
- Alimentation de l'unité de commande (13) du convertisseur (12) du dispositif de réglage de la lame (P1, P2, P3) par l'intermédiaire la tension de commande externe générale Uₑₓₜ,
- Démarrage du convertisseur (12),
- Test de fonctionnalité du convertisseur (12) et / ou les autres composants du dispositif the réglage de la pale (P1, P2, P3) par l'intermédiaire de l'unité de control (13) du dispositif the réglage de la pale (P1, P2, P3)
- Connexion de la batterie (21) et de la tension d'alimentation (UN),
- Exécution d'un test de fonctionnement de la batterie (21) et de la tension d'alimentation (UN) au moyen de l'unité de control (13) du dispositif the réglage de la pale (P1, P2, P3)
- Si il n'y a pas d'erreur, créer de la tension de commande interne (Uᵢₙₜ) au moyen de l'alimentation (25) générée par un circuit intermédiaire de courant continue (27) du convertisseur (12).
- Exécution d'un test de fonctionnement de l'alimentation en tension de commande interne (Uᵢₙₜ) au moyen de l'unité de control (13) du dispositif de réglage de la pale (P1, P2, P3)
- Si l'alimentation en tension de commande interne (Uᵢₙₜ) est en ordre, commuter de l'alimentation externe générale de tension de commande (Uₑₓₜ) à la tension de contrôle interne (Uᵢₙₜ) et verrouiller la chaîne de sécurité interne.
- Si les chaînes de sécurité internes du dispositif de réglage de la pale (P1, P2, P3) sont verrouillées et que le contrôleur de la turbine (15) est prêt à fonctionner, la chaîne de sécurité de la turbine (1) est alors verrouillée,
- Réglage du signal sur « haut » dans la chaîne de sécurité de la turbine (1) pour libérer de la position de départ en drapeau.

10. Méthode selon la revendication 9, considérant que la méthode comprend les étapes suivantes en mode de fonctionnement normal de l'éolienne (2):
- Suivi des fonctions critiques du convertisseur (12) et / ou les composants du dispositif de réglage de pale (P1, P2, P3) par l'intermédiaire de l'unité de control (13) du dispositif de réglage de pale (P1, P2, P3)
- Envoi de l'état des dispositifs de réglage de pale (P1, P2, P3) au contrôleur de turbine (15), à la détection d'un état d'erreur:
- Les dispositifs de réglage de pale (P1, P2, P3) sont actionnés à partir du contrôleur de la turbine (15) pour initier un entraînement synchrone lent dans la position en drapeau,
- Les dispositifs de réglage de pale (P1, P2, P3) restent sur l'alimentation en tension interne (Uᵢₙₜ) au cours du démarrage on mode de sécurité et en position en drapeau,
- Examiner la fonctionnalité du convertisseur (12) et / ou les composants du dispositif de réglage de pale (P1, P2, P3) et tenter de redémarrer, si tout est en ordre.

11. Méthode selon la revendication 9, considérant que la méthode comprend les étapes suivantes lors de la rupture de la tension d'alimentation :
- La batterie (12) pour l'alimentation de secours des dispositifs de réglage de pale (P1, P2, P3) est connectée,
- L'opération on mode de sécurité des dispositifs de réglage de pale (P1, P2, P3) est activée à partir de la turbine de commande (15),
- Arrivé dans la position en drapeau, la batterie (12) est déconnecté pendant un certain temps et l'alimentation en tension générale externe (Uₑₓₜ) est activée,
- Pour des erreurs critiques, passer à l'alimentation de tension générale externe (Uₑₓₜ) dans le temps imparti et ouvrir la chaîne de sécurité de la turbine (1),
- Contrôler la fonctionnalité du convertisseur (12) et / ou autres composants du dispositif de réglage des lames (P1, P2, P3) et si tout est en ordre, engager une nouvelle tentative de démarrage.

12. Méthode selon la revendication 9, considérant que la méthode comprend les étapes suivantes pour les erreurs critiques par exemple les défaillances du dispositif de commande de turbine (15) ou d'une défaillance critique dans le mécanisme de réglage de pale (P1, P2, P3), comprenant les étapes consistant à:
- La détection d'une condition de défaut par l'unité de control (13) du dispositif de réglage de pale (P1, P2, P3),
- L'ouverture du circuit de sécurité interne de l'unité de control (13) et ouvrant ainsi la chaîne de sécurité (1),
- A l'ajustement du signal sur « bas » en ouvrant la chaîne de sécurité (1),
- En obtenant le signal « bas », opérer simultanément en mode de sécurité les dispositifs de réglage de pale (P1, P2, P3).
